# EUROPEAN PATENT APPLICATION

(11) **EP 2 045 954 A2**
(43) Date of publication of application: **08.04.2009**
(21) Application number: 08015950.2
(22) Date of filing: 10.09.2008
(51) Int. Cl.: H04L 7/033

(54) **High-frequency module for performing effective phase compensation of clock for input digital signal**

(30) Priority: 04.10.2007 JP 2007261166
(71) Applicant: Yokogawa Electric Corporation, Tokyo 180-8750 (JP)
(72) Inventor: Kyakuno, Toshihiko c/o Yogogawa Electric Corporation, Musashino-shi Tokyo 180-8750 (JP); Ohta, Atsunobu c/o Yogogawa Electric Corporation, Musashino-shi Tokyo 180-8750 (JP); Ohashi, Masamichi c/o Yogogawa Electric Corporation, Musashino-shi Tokyo 180-8750 (JP); Shirazawa, Futoshi c/o Yogogawa Electric Corporation, Musashino-shi Tokyo 180-8750 (JP); Kodaka, Hirotoshi c/o Yogogawa Electric Corporation, Musashino-shi Tokyo 180-8750 (JP)
(74) Representative: Grünecker, Kinkeldey, Stockmair & Schwanhäusser Anwaltssozietät

(57) **Abstract**

A high-frequency module includes a high-speed logic circuit (5) for processing an input digital signal having a transmission rate of several tens of Gbps by detecting the level of the input digital signal by using a clock having a frequency of several tens of GHz; a variable delay circuit (3) for adding a specific amount of delay to the clock, and outputting the clock to the high-speed logic circuit, wherein the amount of delay is variably set in accordance with a manipulation signal; a phase comparator (8) for measuring a phase difference between the input digital signal and the clock which is input into the high-speed logic circuit, and outputting a phase-difference signal in accordance with the phase difference; a filter (9) for extracting a direct-current signal, which indicates the phase difference, from the phase-difference signal input from the phase comparator; and a controller (10) for generating the manipulation signal assigned to the variable delay circuit, by using the direct-current signal input from the filter.

## Description

### BACKGROUND OF THE INVENTION

### Field of the Invention

The present invention relates to a high-frequency module for processing a high-frequency digital signal which has a frequency of several tens of GHz or a transmission rate of several tens of Gbps.

Priority is claimed on Japanese Patent Application No. 2007-261166, filed October 4, 2007, the contents of which are incorporated herein by reference.

### Description of the Related Art

The present applicant has manufactured electronic modules which can process a digital signal belonging to a 40 GHz band, by using a technique relating to ultra-high-speed compound semiconductors (see the URL (uniform resource locator) as Non-Patent Document 1). The electronic modules have several types which may be (i) of a multiplexer type for converting parallel signals, which belong to a 40 Gbps band, into a serial signal by using a clock (signal) belonging to a 40 GHz band, (ii) of a demultiplexer type for converting a serial signal, which belongs to a 40 Gbps band, into parallel signals by using a clock belonging to a 40 GHz band, and (iii) of a D flip-flop type for latching a digital signal (of any type), which belongs to a 40 Gbps band, by using a clock belonging to a 40 GHz band, and outputting the latched signal. In such an electronic module, as the frequency of the clock or the transmission rate of the input digital signal is very high, it is necessary to perform considerably accurate phase control of the relevant clock and digital signal.

On the other hand, Patent Document 1 discloses an optical transmission apparatus for reliably compensating a delay difference due to a temperature variation between driving signals for a plurality of optical modulation parts. In the optical transmission apparatus, the amount of delay of the driving signal for driving each optical modulation part is controlled by a modulation signal, which is provided from a delay-amount varying part allocated to the relevant optical modulation part. The optical transmission apparatus acquires lots of delay data corresponding to temperatures of target parts. Based on the delay data, the optical transmission apparatus produces a function for defining relationships between the temperatures of the target parts and the amounts of delay, and inputs each target-point temperature, which has been monitored by a temperature monitoring part, into the function, so as to obtain delay data corresponding to the target-point temperature. The obtained delay data (i.e., digital signal) is converted into the above-described modulation signal (i.e., analog signal) by using an A/D converter, and each converted signal is supplied to the corresponding driving part, so as to generate the above-described driving signal.

### Non-Patent Document 1:

http://www.yokogawa.com/opt/modules/opt-40gmodules-en.htm (home page of Yokogawa Electric Corporation for introducing the electronic modules).

Patent Document 1: Japanese Unexamined Patent Application, First Publication No. 2007-158415.

The above-described technique of Patent Document 1 may be applied to the phase control of the clock and the input digital signal in the above-described electronic module. However, the production of the function for defining the relationships between the target-point temperatures and the amounts of delay is very complex, and requires a considerable amount of time. That is, in order to obtain the above function, the optical transmission apparatus must (i) be contained in a constant-temperature vessel, so as to set a plurality of temperatures in turn, and (ii) measure the delay time of each driving signal at each temperature, so as to store each measured value as delay data into memory. Such processes require a large amount of time.

In addition, such a delay-data table uses a single parameter (i.e., temperature), and does not consider a (phase) variation in the delay of each driving signal due to a factor other than the temperature (e.g., due to a change with the passage of time). Therefore, the desired effect may not be obtained.

### SUMMARY OF THE INVENTION

In light of the above circumstances, an object of the present invention is to provide a high-frequency module for performing a more-highly-effective phase compensation of the clock with respect to the input electrical signal by a simpler method, in comparison with the conventional technique.

Therefore, the present invention provides a high-frequency module into which an input digital signal having a transmission rate of several tens of Gbps and a clock having a frequency of several tens of GHz are input, the high-frequency module comprising:
a high-speed logic circuit for processing the input digital signal in a predetermined manner by detecting the level of the input digital signal by using the clock;
a variable delay circuit for adding a specific amount of delay to the clock, and outputting the processed clock to the high-speed logic circuit, wherein the amount of delay is variably set in accordance with a manipulation signal;
a phase comparator for measuring a phase difference between the input digital signal and the clock which is input from the variable delay circuit to the high-speed logic circuit, and outputting a phase-difference signal in accordance with the phase difference;
a filter for extracting a direct-current signal, which indicates the phase difference, from the phase-difference signal input from the phase comparator; and
a controller for generating the manipulation signal assigned to the variable delay circuit, by using the direct-current signal input from the filter.

Preferably, a wiring line for inputting the clock into the phase comparator and a wiring line for inputting the input digital signal into the phase comparator have the same wiring length.

In a typical example:
the input digital signal is serial data; and
the high-speed logic circuit converts the serial data into parallel data having a transmission rate half of that of the serial data, by detecting the level of the serial data at predetermined regular intervals by using the clock.

In this case, it is possible that:
the clock has a frequency of 22GHz;
the serial data as the input digital signal has a transmission rate of 44 Gbps.

It is also possible that:
the high-speed logic circuit converts the serial data into the parallel data by detecting the level of the serial data at each predetermined transition point of the clock.

In this case, the predetermined transition point of the clock may be each rising point.

In accordance with the present invention, in a high-frequency module into which an input digital signal having a transmission rate of several tens of Gbps and a clock having a frequency of several tens of GHz are input, the amount of delay provided by the variable delay circuit is variably set based on the phase difference (measured by the phase comparator) between the input electrical signal and the clock which is input from the variable delay circuit into the high-speed logic circuit. Therefore, even when the phase difference varies due to a variation in the peripheral temperature or another factor, such a phase variation is quickly corrected by means of a phase control loop formed by the phase comparator, the filter, the controller, and the variable delay circuit. Accordingly, a more-highly-effective phase compensation of the clock for the input serial data can be performed by a simpler method in comparison with the conventional technique.

### BRIEF DESCRIPTION OF THE DRAWINGS

Fig. 1 is a block diagram of a high-frequency module A as an embodiment of the present invention.
Fig. 2 is a timing chart for showing the basic operation of the high-frequency module A.
Fig. 3 is a schematic diagram for explaining the phase control of the high-frequency module A.
Fig. 4 is a schematic diagram showing the variable delay range of the CMU 3 in the high-frequency module A.
Fig. 5 is a schematic diagram showing the manipulation signal and the delay characteristics of the CMU 3 in the embodiment.

### DETAILED DESCRIPTION OF THE INVENTION

Hereinafter, an embodiment of the present invention will be described with reference to the appended figures.

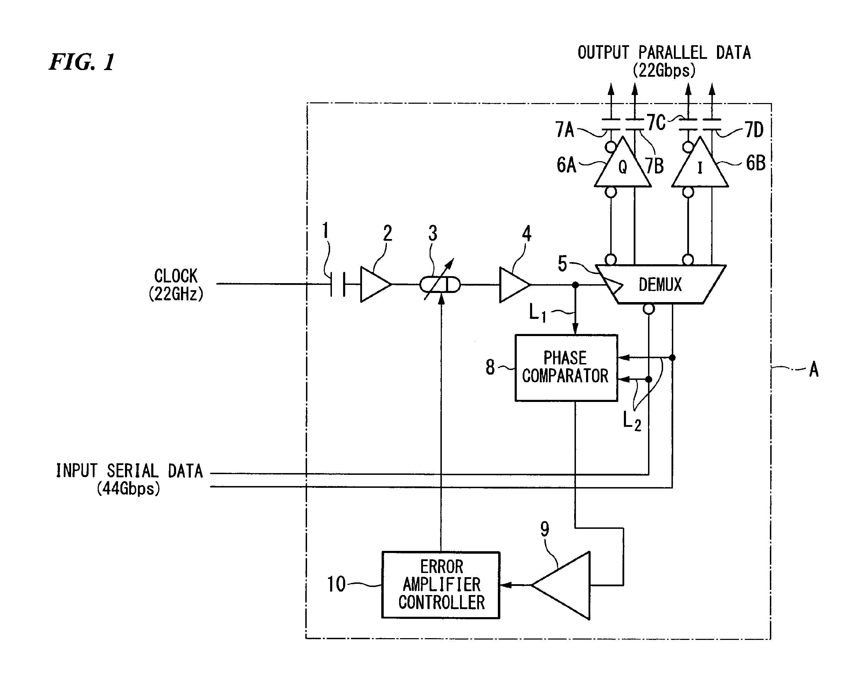

Fig. 1 is a block diagram of a high-frequency module A as the embodiment. The high-frequency module A is a high-frequency circuit having two input signals, that is, (i) an input serial data (signal) of a balance type (transmission rate: 44 Gbps), and (ii) a clock (signal) having a frequency of 22 GHz (i.e., corresponding to half of the transmission rate of the input serial data). From the high-frequency module A, output parallel data (signals) along two lines are output, which has a transmission rate of 22 Gbps (i.e., a 1/2 multiple of the above serial data). The high-frequency module A is installed in a metal package.

As shown in Fig. 1, the high-frequency module A has an input capacitor 1, an input amplifier 2, a clock management unit 3 (i.e., CMU 3), an amplifier 4, a demultiplexer 5 (i.e., DEMUX 5), output amplifiers 6A and 6B, output capacitors 7A to 7D, a phase comparator 8, an error amplifier 9, and an error amplifier controller 10.

Among the above structural elements, the CMU 3, the phase comparator 8, the error amplifier 9, and the error amplifier controller 10 form a phase control loop for controlling the phase of the clock input into the DEMUX 5, so as to keep a specific relationship between the phase of the clock input into the DEMUX 5 and the phase of the input serial data.

The input capacitor 1 removes the DC (direct current) component of the clock, and outputs the clock into the input amplifier 2.

The input amplifier 2 amplifies the clock, and outputs the clock into the CMU 3.

The CMU 3 is a variable delay circuit for adding a predetermined amount of delay, which is defined in accordance with a manipulation signal input from the error amplifier controller 10, to the clock, and outputting the processed clock to the amplifier 4.

The amplifier 4 amplifies the clock, which has attenuated through the CMU 3, and outputs the amplified clock to the DEMUX 5 and the phase comparator 8.

The DEMUX 5 converts the input serial data (transmission rate: 44 Gbps) into the output parallel data along two lines, which has a transmission rate (22 Gbps) half as much as that of the serial data, by detecting the level of the serial data at each transition point (e.g., rising point) of the clock having a frequency (22 GHz) corresponding to half of the transmission rate of the serial data. That is, the DEMUX 5 is a high-speed logic circuit for outputting the output parallel data as a balance-type signal.

The output amplifiers 6A and 6B are amplifiers of a balance-input/balance-output type. The amplifiers 6A and 6B thus amplify balance-type parallel data, which is received from the DEMUX 5, and outputs the amplified parallel data to the output capacitors 7A to 7D.

The output capacitors 7A to 7D cut the DC component of the balance-type parallel data, which is input from the output amplifiers 6A and 6B, and output the processed parallel data to the outside of the module.

The phase comparator 8 measures the phase difference between the clock, which is input from the CMU 3 to the DEMUX 5, and the input serial data, and outputs a phase-difference signal, which corresponds to the phase difference, to the error amplifier 9. As the phase comparator 8, part of a phase control oscillation circuit, which is disclosed in Reference Document 1 (Charles R. Hogge, Jr, "A Self Correcting Clock Recovery Circuit", IEEE Journal of Lightwave Technology, Vol. LT-3, No. 6, pp. 1312-1314, December, 1985" (see Fig. 1)), may be used. The disclosed phase control oscillation circuit detects the level of data at each transition point of the relevant clock, so as to measure the phase difference between the clock and the data, and automatically controls the oscillation frequency (i.e., clock frequency) of a VCXO (voltage-controlled xtal oscillator) which generates the clock. This phase control oscillation circuit has a phase comparison circuit, which can be used as the phase comparator 8.

In Fig. 1, reference symbol L₁ indicates a wiring line for inputting the clock into the phase comparator 8, and reference symbol L₂ indicates a wiring line for inputting the input serial data into the phase comparator 8, where both wiring lines have the same wiring length. That is, in the present high-frequency module A, the delay time of the clock along the wiring line L₁ is identical to that of the input serial data along the wiring line L₂. As the wiring lines L₁ and L₂ have the same wiring length, it is possible to highly accurately establish a desired phase relationship between the phase of the input serial data and the phase of the clock.

The error amplifier 9 is an amplifier having a filtering function, that is, corresponds to the filter of the present invention. The error amplifier 9 receives the phase-difference signal, and extracts a DC (direct current) signal, which indicates the phase difference between the lock and the input serial data, from the phase-difference signal. That is, the phase-difference signal includes (i) a frequency-difference component which indicates the frequency difference between the clock and the input serial data, and (ii) a frequency component which is the sum of the frequency of the clock and the frequency of the input serial data. Among the above two components, the error amplifier 9 extracts only the frequency-difference component, and amplifies the corresponding DC signal. The amplified DC signal is output into the error amplifier controller 10. In the relevant DC signal, the DC voltage varies in accordance with the frequency difference between the clock and the input serial data.

Based on the above DC signal, the error amplifier controller 10 generates a manipulation signal assigned to the CMU 3. That is, the error amplifier controller 10 generates the manipulation signal in consideration that the variable range of the delay amount provided by the CMU 3 is a finite specific range. The manipulation signal will be explained in more detail later.

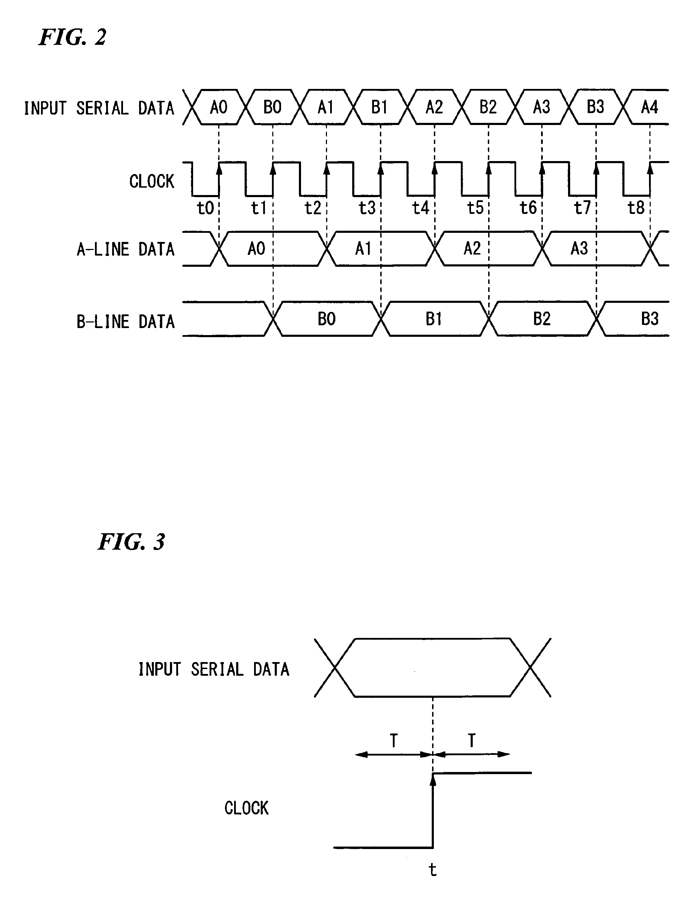

Next, the operation of the high-frequency module A having the above-described structure will be explained in detail with reference to Figs. 2 and 3.

First, the basic operation of the high-frequency module A will be explained. As shown in Fig. 2, the input serial data is a serial data in which A-line data (A0, A1, A2, ...) and B-line data (B0, B1, B2, ...) are alternately arranged along time. The DEMUX 5 detects the level of each data (i.e., A0, B0, A1, B1, A2, B2, ...) at each rising point (t0, t1, t2, ...) of the clock, which is input via the CMU 3 and the like, so that the A-line data and the B-line data are separated and the output parallel data formed by two lines is generated.

Here, the input serial data is an electrical signal having an extremely high transmission rate (44 Gbps). Therefore, when detecting the level of each data (i.e., A0, B0, A1, B1, A2, B2, ...) at each rising point (t0, t1, t2, ...) of the clock, the width (see "2T" in Fig. 3) in which the level of the data is stable is very short, and the aperture ratio of the relevant eye pattern is small. As shown in Fig. 3, in order to accurately detect the level of each data (i.e., A0, B0, A1, B1, A2, B2, ...), the rising point t of the clock should be positioned at the midpoint of the temporal width 2T as accurate as possible.

Based on the DC signal input from the error amplifier 9, that is, a signal whose DC voltage varies in accordance with the phase difference between the clock and the input serial data (which are input into the phase comparator 8), the error amplifier controller 10 controls the amount of delay provided by the CMU 3 in a manner such that the rising point t of the clock is positioned at the midpoint of the above-described temporal width 2T.

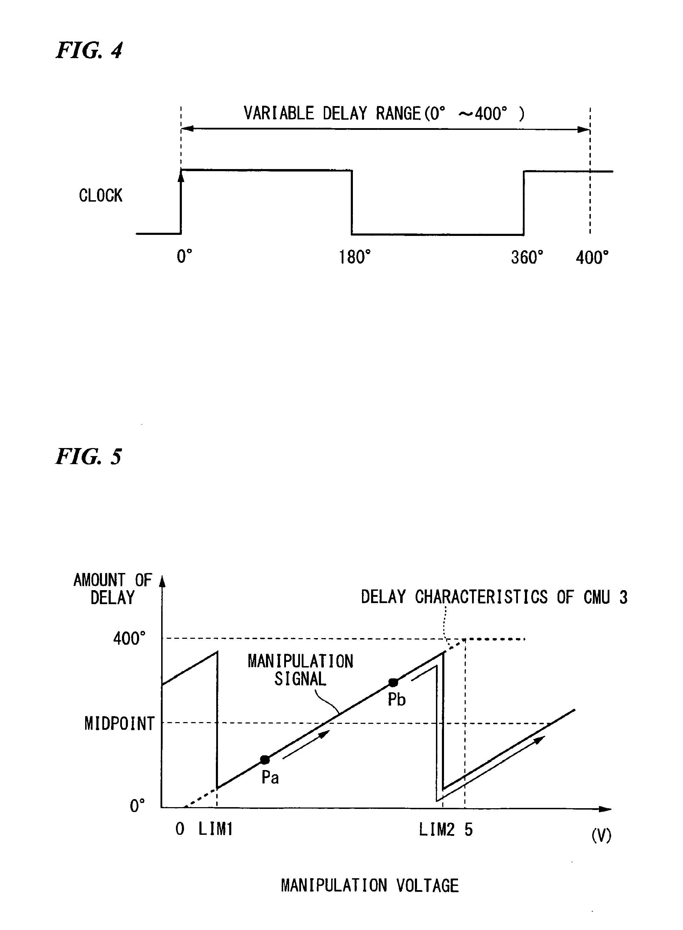

Fig. 4 is a diagram showing the variable range of the amount of delay provided by the CMU 3. As shown in Fig. 4, the CMU 3 has an ability of delaying the clock within a range of, for example, 0 to 400 degrees, as converted values corresponding to the phase of the clock. That is, as shown in Fig. 5, in the delay characteristics of the CMU 3, if the DC voltage (i.e., manipulation voltage) of the manipulation signal varies within a range from 0 to 5 V, the phase of the clock input from the input amplifier 2 is shifted within a range from 0 to 400 degrees.

As shown by the solid line in Fig. 5, the error amplifier controller 10 generates the manipulation voltage (as the manipulation signal for controlling the CMU 3 having the above-mentioned delay characteristics), which varies in a sawtooth waveform, by using the DC signal input from the error amplifier 9. More specifically, the error amplifier controller 10 defines a lower limit LIM1 and an upper limit LIM2 on the delay characteristics of the CMU 3, and generates the manipulation voltage (i.e., manipulation signal) in a manner such that (i) when the manipulation voltage corresponding to the DC signal input from the error amplifier 9 falls below the lower limit LIM1, the error amplifier controller 10 shifts the manipulation voltage to the upper limit LIM2, and (ii) when the manipulation voltage corresponding to the DC signal input from the error amplifier 9 exceeds the upper limit LIM2, the error amplifier controller 10 shifts the manipulation voltage to the lower limit LIM1.

The amount of delay of the clock is determined by the above manipulation signal. Therefore, even if the rising point t of the clock is positioned at a phase-lead point (see Pa in Fig. 5) or a phase-lag point (see Pb in Fig. 5) with respect to the midpoint within the temporal width 2T of the input serial data, the amount of delay provided by the CMU 3 is controlled (see the arrows in Fig. 5) so that the rising point t of the clock is positioned at the midpoint of the temporal width 2T.

In accordance with the present embodiment, even if the position of the rising point t of the clock is shifted from the midpoint within the temporal width 2T of the input serial data due to any factor (i.e., not only the variation in the peripheral temperature), such a phase variation is quickly corrected by means of the relevant phase control loop. Therefore, a more-highly-effective phase compensation of the clock for the input serial data can be performed by a simpler method in comparison with the conventional technique.

While preferred embodiments of the present invention have been described and illustrated above, it should be understood that these are exemplary embodiments of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

For example, the following variations are possible.

First, even though the high-speed logic circuit is the DEMUX 5 in the above embodiment, it is not limited thereto. That is, the high-speed logic circuit may be (i) a multiplexer for converting parallel data, which belongs to a 40 GHz band, to serial data by using a clock belonging to a 40 GHz band, or (ii) a D flip-flop for latching a digital signal (of any type), which belongs to a 40 GHz band, by using a clock belonging to a 40 GHz band, and outputting the latched signal.

Additionally, in the above embodiment, all structural elements shown in Fig. 1 are installed in the metal package. However, as the error amplifier 9 and the error amplifier controller 10 are circuits which handle not a high-frequency signal belonging to a "GHz" band, but direct voltage. Therefore, they may be installed in a package other than the above metal package.

## Claims

1. A high-frequency module into which an input digital signal having a transmission rate of several tens of Gbps and a clock having a frequency of several tens of GHz are input, the high-frequency module comprising:
a high-speed logic circuit (5) for processing the input digital signal in a predetermined manner by detecting the level of the input digital signal by using the clock;
a variable delay circuit (3) for adding a specific amount of delay to the clock, and outputting the processed clock to the high-speed logic circuit, wherein the amount of delay is variably set in accordance with a manipulation signal;
a phase comparator (8) for measuring a phase difference between the input digital signal and the clock which is input from the variable delay circuit to the high-speed logic circuit, and outputting a phase-difference signal in accordance with the phase difference;
a filter (9) for extracting a direct-current signal, which indicates the phase difference, from the phase-difference signal input from the phase comparator; and
a controller (10) for generating the manipulation signal assigned to the variable delay circuit, by using the direct-current signal input from the filter.

2. The high-frequency module in accordance with Claim 1, wherein a wiring line for inputting the clock into the phase comparator and a wiring line for inputting the input digital signal into the phase comparator have the same wiring length.

3. The high-frequency module in accordance with Claim 1, wherein:
the input digital signal is serial data; and
the high-speed logic circuit converts the serial data into parallel data having a transmission rate half of that of the serial data, by detecting the level of the serial data at predetermined regular intervals by using the clock.

4. The high-frequency module in accordance with Claim 3, wherein:
the clock has a frequency of 22GHz;
the serial data as the input digital signal has a transmission rate of 44 Gbps.

5. The high-frequency module in accordance with Claim 3, wherein:
the high-speed logic circuit converts the serial data into the parallel data by detecting the level of the serial data at each predetermined transition point of the clock.

6. The high-frequency module in accordance with Claim 5, wherein:
the predetermined transition point of the clock is each rising point.
